# EUROPÄISCHE PATENTSCHRIFT

(11) **EP 2 973 948 B1**
(45) Veröffentlichungstag und Bekanntmachung des Hinweises auf die Patenterteilung: **28.04.2021**
(21) Anmeldenummer: 14713033.0
(22) Anmeldetag: 11.02.2014
(51) Int. Cl.: H02K 1/28, F16D 1/08

(54) **FIXIERUNG UND POSITIONIERUNG EINES ROTORPAKETES AUF EINER ROTORWELLE**
FIXING AND POSITIONING OF A ROTOR STACK ON A ROTOR SHAFT
FIXATION ET POSITIONNEMENT D'UN BLOC ROTOR SUR UN ARBRE DE ROTOR

(30) Priorität: 14.03.2013 DE 102013004338
(43) Veröffentlichungstag der Anmeldung: 20.01.2016
(73) Patentinhaber: WILO SE, 44263 Dortmund (DE)
(72) Erfinder: STRELOW, Günter, 44801 Bochum (DE); EICHMANN, Andreas, 44149 Dortmund (DE)
(74) Vertreter: Cohausz Hannig Borkowski Wißgott
(86) Internationale Anmeldenummer: PCT/EP2014/000367
(87) Internationale Veröffentlichungsnummer: WO 2014/139621

(56) Entgegenhaltungen:
- EP-A1- 0 997 206
- DE-A1- 10 051 239
- GB-A- 293 122

## Beschreibung

Die Erfindung betrifft ein Pumpenaggregat mit einer Pumpeneinheit und einem diese antreibenden Elektromotor umfassend einen Rotor mit einer Rotorwelle und einem darauf befestigten Rotorpaket.

Pumpenaggregate werden in der Regel durch einen Elektromotor angetrieben, wie dies beispielsweise in der deutschen Offenlegungsschrift DE 10051239 A1 beschrieben ist. Dieser umfasst einen Stator und einen Rotor, wobei der Stator ein elektromagnetisches Feld erzeugt, welches mit einem vom Rotor gebildeten elektromagnetischen Feld interagiert, so dass auf den Rotor ein Drehmoment ausgeübt wird, durch welches der Rotor beschleunigt wird. Für Anwendungen in Pumpen trägt das Ende der Rotorwelle meist ein in der Pumpeneinheit angeordnetes Pumpenlaufrad oder das Ende ist über eine Kupplung mit einer weiteren Welle verbunden, die ein solches Laufrad trägt. Das Rotorpaket ist entweder in der Ausführung als Asynchronmotor als Kurzschlussläufer ausgebildet oder trägt im Falle eines Synchronmotor Permanentmagnete.

Die Befestigung des Rotorpaketes des Elektromotors auf seiner Rotorwelle ist in der Offenlegungsschrift DE 10051239 A1 nicht erläutert. Allerdings erfolgt sie in der Regel durch eine axial gefügte Presspassung. Das Rotorpaket wird dabei auf die Rotorwelle geschoben wobei der Außendurchmesser der Welle und der Innendurchmesser einer zentralen Bohrung des Rotorpaketes derart aufeinander abgestimmt sind, dass zwischen Rotorpaket und Welle eine entsprechende Presspassung steht. Der Nachteil einer derartigen Verbindung besteht darin, dass bei der Herstellung der Rotorwelle und des Rotorpaketes geringe Toleranzen eingehalten werden müssen, um den Presssitz zu gewährleisten. Darüber hinaus ist die Pressverbindung aufgrund verschiedener Ausdehnungskoeffizienten der Materialien temperaturempfindlich. Schließlich bedingen die mechanischen Drehmomente im Elektromotor, dass die Pressverbindung über die Betriebsdauer nicht konstant ist.

Eine alternative Verbindungstechnik besteht darin, den Rotor auf die Welle zu schrauben oder durch zusätzliche Fixiermittel, beispielsweise Federringe oder Splinte zur axialen Fixierung des Rotorpaketes zu verwenden. Dabei ist für eine drehende Mitnahme der Rotorwelle durch das Rotorpaket ein Formschluss zwischen diesen Komponenten vorgesehen. Ein derartiger Formschluss ist jedoch aufwendig herzustellen und die zusätzlichen Fixiermittel führen zu zusätzlichen Kosten, vermeidbarem Fügeaufwand und sind als Verschleißteile grundsätzlich unerwünscht. Eine weitere Alternative besteht darin, dass Rotorpaket auf der Rotorwelle mittels Schweißverbindung zu fixieren. Diese Verbindungstechnik schränkt jedoch die Auswahl der Materialien auf schweißbare Materialien ein.

Aus der britischen Patentanmeldung GB 293122 A ist es dem Fachmann bekannt, dass eine Befestigung eines Rotors auf der Welle einer elektrischen Maschine durch die Verwendung von komplementären Kreiskeilen zwischen Welle und Rotorpaket gelingen kann. Auch beschreibt die europäische Patentanmeldung EP 0997206 A1 eine Kreiskeilverbindung zur Befestigung eines rotierenden Teils auf einer Rotorwelle. Allerdings betreffen diese Anordnungen keine konkrete Pumpenanwendung.

Aufgabe der Erfindung ist es, eine zur Presspassung alternative Verbindung zwischen Rotorwelle und Rotorpaket bereit zu stellen, die eine sichere und genaue Positionierung und Fixierung des Rotorpaketes auf der Rotorwelle gewährleistet und einfach herzustellen ist.

Diese Aufgabe wird durch die Merkmale der in Anspruch 1 definierten Erfindung gelöst. Vorteilhafte Weiterbildungen der Erfindung sind in den Unteransprüchen angegeben. Erfindungsgemäß wird ein Pumpenaggregat mit einer Pumpeneinheit und einem diese antreibenden Elektromotor umfassend einen Rotor mit einer Rotorwelle und einem darauf befestigten Rotorpaket vorgeschlagen, wobei die Befestigung des Rotorpakets auf der Rotorwelle durch eine Kreiskeilverbindung umfassend mindestens einen Kreiskeil und einen komplementären Kreiskeil gebildet ist.

Die Verwendung einer Kreiskeilverbindung ermöglicht den Ausgleich von Toleranzen, so dass die Bauteile mit höheren Toleranzen gefertigt werden können. Deren Herstellungskosten reduzieren sich damit erheblich. Des Weiteren gewährleistet die Kreiskeilverbindung eine wirksame Drehmomentübertragung und eine über die Betriebsdauer konstante Pressverbindung, da sie beim Verdrehen in Klemmrichtung selbsthemmend ist. Schließlich ermöglicht die Kreiskeilverbindung eine einfache Montage des Rotorpakets und gewährleistet für Wartungszwecke bei entsprechender Ausführung auch eine einfache Lösbarkeit zum Zwecke der Demontage des Rotorpaketes von der Rotorwelle.

Darüber hinaus hat eine Kreiskeilverbindung gegenüber herkömmlichen Pressverbindungen den Vorteil, dass sich die Verbindungpartner großflächig berühren, was bei einer Presspassung aufgrund entstehender Verformung zu unrunden Verbindungen nicht der Fall ist. Ferner wird mittels einer Kreiskeilverbindung eine gleichmäßige Flächenpressung entlang des Umfangs der Verbindung erreicht, die zudem gezielt je nach Drehmoment eingestellt werden kann.

Bei der erfindungsgemäßen Kreiskeilverbindung zwischen Rotorwelle und Rotorpaket bildet die Rotorwelle ein zylindrisches Innenteil, dessen Querschnitt zumindest im Bereich der Kreiskeilverbindung kreisförmig ist, und auf dessen Umfangsfläche wenigstens ein Kreiskeil angeordnet sind. Im Querschnitt betrachtet, bildet der Außenumfang der Rotorwelle einen Grundkreis, auf dem sich das Keilprofil erhebt. Das Rotorpaket bildet als Verbindungspartner demgegenüber ein Außenteil mit einer zylindrischen Bohrung, auf deren Innenseite sich wenigstens ein komplementärer Kreisteil befindet. Im Querschnitt betrachtet, bildet der Innenumfang des Rotorpakets einen Grundkreis, auf dem sich das komplementäre Keilprofil erhebt. Jeder Kreiskeil besteht dabei aus einem stetig steigenden Profil über dem abgewickelten Grundkreis, das bis zu einer bestimmten Profilhöhe ansteigt und danach in einer Flanke abfällt, die als Keilrücken bezeichnet wird.

Rotorwelle und das Rotorpaket werden mit Spiel gefügt, wobei durch Verdrehen der beiden Teile gegeneinander das Spiel beseitigt wird. Die Rotorwelle wird dabei gegen das Rotorpaket verspannt, wobei die Keilprofile der Kreiskeile gegeneinander gepresst werden.

Vorzugsweise ist die Keilkreisverbindung dadurch gebildet, dass die Außenumfangsfläche der Rotorwelle in eine erste Umfangsrichtung A zur Ausbildung des mindestens einen Kreiskeils zumindest axialabschnittsweise keilförmig ist. Es ist folglich nicht notwendig, dass die Rotorwelle entlang ihrer gesamten axialen Länge das Keilprofil trägt, wenngleich dies möglich ist.

Entsprechend bildet die zur Außenumfangsfläche korrespondierende Innenumfangsfläche des Rotorpakets eine Gegenfläche, die in die entgegengesetzte Umfangsrichtung B zur Ausbildung des mindestens einen komplementären Kreiskeils zumindest axialabschnittsweise komplementär keilförmig ist. Es ist folglich auch hier nicht notwendig, dass das Rotorpaket entlang seiner gesamten axialen Länge das Keilprofil trägt, wenn gleich dies auch hier möglich und sinnvoll ist, um einen maximal festen Sitz zu erreichen.

Relativ zum Rotorpaket kann die Rotorwelle dann gegenüber diesem verspannt werden, indem die Rotorwelle bei feststehendem Rotorpaket in die entgegengesetzte Umfangsrichtung B gedreht wird. In Bezug zum Rotorpaket wird die Verspannung dagegen durch eine relative Drehung des Rotorpakets bei feststehender Rotorwelle in die erste Umfangsrichtung A bewirkt. Auch ist es möglich, dass zum Zwecke der Fixierung das Rotorpaket in die erste Umfangsrichtung A und die Rotorwelle in die entgegengesetzte Umfangsrichtung B gedreht werden.

Aus diesem Verständnis ergibt sich, dass eine Klemmwirkung der Kreiskeilverbindung dann vorliegt, wenn das Rotorpaket relativ zur Rotorwelle in die erste Umfangsrichtung A und die Rotorwelle relativ zum Rotorpaket in die entgegengesetzte Umfangsrichtung B gedreht wird. Da das Rotorpaket infolge des vom Statorfeld auf ihn ausgeübten Beschleunigungsmoments der antreibende Verbindungspartner ist und die Rotorwelle entsprechend der angetriebene Verbindungspartner ist, ist es vorteilhaft, wenn die Antriebsrichtung des Elektromotors der ersten Umfangsrichtung A entspricht. Aufgrund des Trägheitsmoments, das in die entgegengesetzte Umfangsrichtung gerichtet ist, ergibt sich dadurch automatisch eine Klemmwirkung der Kreiskeilverbindung.

Grundsätzlich kann die Kreiskeilverbindung einen, zwei oder mehr Kreiskeile an der Rotorwelle sowie eine entsprechende Anzahl komplementärer Kreiskeile am Rotorpaket aufweisen. Gemäß einer besonders bevorzugten Ausführungsvariante des Pumpenaggregats ist die Kreiskeilverbindung jedoch durch drei Kreiskeile auf der Außenumfangsfläche der Rotorwelle und drei komplementäre Kreiskeile auf der Innenumfangsfläche des Rotorpakets gebildet. Dies hat den Vorteil, dass die Kreiskeilverbindung selbstzentrierend ist.

In einer vorteilhaften Ausgestaltung der Erfindung liegt die Steigung der Kreiskeile der Kreiskeilverbindung zwischen 1:20 bis 1: 200. Im unteren Bereich des genannten Steigungsverhältnisbereichs, d.h. zwischen 1: 20 bis etwa 1:100 besteht die Möglichkeit, die Kreiskeilverbindung zu Demontagezwecken zu lösen, wobei im oberen Bereich, d.h. bei Steigungsverhältnissen von 1:100 bis 1:200 unlösbare Verbindungen realisiert werden können.

Vorzugsweise ist die Kontur der Kreiskeile als logarithmische Spirale ausgeführt. Dies hat den Vorteil, dass sich das Rotorpaket und die Rotorwelle nicht linear, sondern flächig berühren.

Erfindungsgemäß ist das Pumpenaggregat mit einem Elektromotor versehen, das einen nasslaufenden Rotor umfasst. Dies bedeutet, dass der Rotor, d.h. insbesondere das Rotorpaket, von einer Flüssigkeit umgeben ist und im Betrieb entsprechend flüssigkeitsumströmt ist. Ein derartiges Pumpenaggregat ist auch als Nassläuferpumpe bekannt.

Eine ganz besondere vorteilhafte Eigenschaft, die sich aus der Verwendung der Kreiskeilverbindung bei einem Pumpenaggregat mit einem nasslaufenden Elektromotor ergibt, besteht darin, dass im verspannten Zustand der Kreiskeilverbindung zwischen den Keilrücken zweier Kreiskeile Öffnungen bilden, die von dem flüssigen Medium im nasslaufenden Elektromotor durchströmt werden können. Die Öffnungen verlaufen achsparallel zur Rotorwelle. Dies gewährleistet eine optimale Zirkulation der Flüssigkeit im Rotorraum, insbesondere im Bereich vor dem Rotorpaket zum Bereich hinter dem Rotorpaket und umgekehrt, wodurch zum einen die Festsetzung von Partikeln verhindert wird und zum anderen ein Wärmetransport bewirkt wird.

Gemäß dieser Erkenntnis ist der Rotor nasslaufend ausgebildet, wobei zwischen wenigstens einem Kreiskeil und einem in Umfangsrichtung benachbarten komplementären Kreiskeil im verspannten Zustand der Kreiskeilverbindung in Umfangsrichtung, insbesondere in die erste Umfangsrichtung A, eine Öffnung gebildet ist, durch die im Betrieb des Pumpenaggregats die den Rotor umgebende Flüssigkeit strömen kann.

Die Kreiskeile, d.h. ein Kreiskeil der Rotorwelle und ein komplementärer Kreiskeil des Rotorpakets, besitzen an ihrem Profilende eine Flanke, insbesondere eine steile Flanke, wobei sich im verspannten Zustand der Kreiskeilverbindung eine besagte Öffnung zwischen zwei benachbarten Flanken ergibt. Sind mehrere Kreiskeile auf der Rotorwelle vorhanden, sind derartige Öffnungen entsprechend zwischen jedem Kreiskeil der Rotorwelle und dem entsprechenden in Umfangsrichtung benachbarten, komplementären Kreiskeil des Rotorpakets im verspannten Zustand der Kreiskeilverbindung vorhanden. Gemäß dieser Ausführungsvariante bleibt wenigstens einer dieser axialen Öffnungen nach der Befestigung des Rotorpaketes auf der Rotorwelle frei, so dass er im Betrieb als axialer Durchströmkanal verwendet werden kann, durch den die im Rotorraum befindliche Flüssigkeit strömen kann. Werden beispielsweise drei Kreiskeile bei der Kreiskeilverbindung verwendet, so bestehen drei derartige Öffnungen, die als axiale Durchströmöffnungen verwendet werden können.

Die genannte Flüssigkeit kann beispielsweise die von der Pumpe geförderte Flüssigkeit sein, beispielsweise in Anwendungen des Pumpenaggregats als Heizungspumpe Wasser oder Glykol, wobei der Rotorraum dann mit dem Pumpenraum kommunizierend verbunden ist. Alternativ kann der Rotorraum geschlossen sein, so dass die Flüssigkeit im Rotorraum von der geförderten Flüssigkeit verschieden ist.

Es besteht die Möglichkeit, dass die eine Öffnung -im Falle einer Kreiskeilverbindung mit lediglich einem einzigen Kreiskeil und einem komplementären Kreiskeil- oder eine oder mehrere Öffnungen der Kreiskeilverbindung - im Falle der Verwendung einer Kreiskeilverbindung mit mehreren Kreiskeilen- ein Sperrmittel einliegt. Ein solches Sperrmittel kann ein Lösen der Kreiskeilverbindung verhindern. Ein derartiges Lösen könnte beispielsweise in einem Fall eintreten, wenn der Elektromotor des Pumpenaggregates in Folge einer Blockierung des Pumpenlaufrades zumindest kurzzeitig rückwärts drehen muss, um das Laufrad wieder frei zu bekommen, wobei dann ein Drehmoment entgegen der Klemmenrichtung erzeugt wird. Das Sperrmittel kann massiv oder hohl ausgebildet sein, wobei eine hohle Ausbildung von Vorteil ist, da dies die Durchströmbarkeit der entsprechenden Öffnungen, in die das Sperrmittel eingesetzt ist, nicht wesentlich beeinträchtigt ist. Die Verwendung eines massiven Sperrmittels kann bei Kreiskeilverbindungen mit mehr als einem Kreiskeil verwendet erfolgen, damit eine der dann vorhandenen Öffnungen freibleiben kann, wohingegen die andere Öffnung oder eine der anderen Öffnungen dann das Sperrmittel aufnimmt.

Besonders vorteilhaft ist es ferner, wenn in der Öffnung oder wenigstens einer der Öffnungen ein Filterelement einliegt. Ein solches Filterelement ist in der Lage, aus der im Rotorraum befindlichen Flüssigkeit schwebende Feststoffpartikel herauszufiltern und damit zu verhindern, dass diese sich an unerwünschten Stellen, beispielsweise im Rotorspalt oder im Bereich des Lagerspaltes an einem Gleitlager festsetzen und dort zu erhöhtem Verschleiß oder anderen Schäden führen.

Das Filterelement kann beispielsweise schwammartig sein, insbesondere aus einem porösen, beispielsweise elastomeren Kunststoff gebildet sein, oder eine netzartige Struktur aus einem thermoplastischen oder duroplastischen Kunststoff aufweisen, oder alternativ als ein Drahtgeflecht ausgebildet sein. Das Filterelement kann sich entlang der gesamten axialen Länge einer Öffnung erstrecken oder nur einen Teil dieser axialen Länge ausfüllen. Auch ist es möglich, dass zwei oder mehr derartige Filterelemente hintereinander in einer Öffnung einliegen.

Vorzugsweise kann eines der Filterelemente gleichzeitig als Sperrmittel dienen. Dies kann beispielsweise durch ein Drahtgeflecht als Filterelement erreicht werden, oder durch ein Filterelement, das eine rohrförmige Stützstruktur (Röhrchen) besitzt, die in eine Öffnung eingeschoben ist und die in ihrem Inneren ein oder mehrere Filterelemente trägt.

Erfindungsgemäß bildet die Kreiskeilverbindung eine umfängliche Kontaktfläche mit einem Gesamtumfangswinkel zwischen 180° und 330°. Als umfängliche Kontaktfläche wird hier die Summe aller Winkelabschnitte α₂ der Kreiskeilverbindung verstanden, bei denen der Kreiskeil oder die Kreiskeile der Rotorwelle mit seinem/ihren Kreisprofil(en) an dem Kreisprofil des komplementären Kreiskeils oder den Kreisprofilen der komplementären Kreiskeile des Rotorpakets anliegt/liegen. Je größer die umfängliche Kontaktfläche ist, desto größer ist das maximale Drehmoment, das vom Rotorpaket auf die Rotorwelle übertragen werden kann. Da die die umfängliche Kontaktfläche definierenden Winkelabschnitte α₂ mit den die Öffnungen bzw. Durchströmöffnungen zwischen den Keilrücken definierenden Winkelabschnitte α₁ einen Vollkreis bilden, sollte die umfängliche Kontaktfläche nicht zu groß gewählt werden, weil anderenfalls die Breite der Durchströmöffnungen zu gering ist. Beispielsweise entfallen bei einer Kreiskeilverbindung mit drei Kreiskeilen und einer umfänglichen Kontaktfläche von 300° je α₁ = 20° Winkelabschnitt auf eine Durchströmöffnung. Damit die Durchströmöffnungen eine noch ausreichende Durchströmkapazität besitzen, sollten diese einen Umfangswinkel von mindestens α₁ = 10° besitzen, so dass für diesen Fall die maximale umfänglich Kontaktfläche ca. 330° beträgt.

Bei den vorgenannten Ausführungsvarianten kann das Rotorpaket eine radial innenliegende Schicht aus einem Kunststoff aufweisen, in der der komplementäre Kreiskeil ausgebildet ist oder die komplementären Kreiskeile ausgebildet sind. Vorzugsweise kann das gesamte Rotorpaket aus Kunststoff gefertigt sein mit darin eingebetteten Permanentmagneten oder Stäben mit Kurzschlussringen.

Alternativ kann das Rotorpaket durch zumindest einen ringförmigen oder ringabschnittsförmigen, insbesondere gesinterten Permanentmagneten gebildet sein, wobei der Kreiskeil oder die Kreiskeile in der zur Rotorwelle gerichteten Innenfläche des Permanentmagneten, bzw. der Permanentmagneten ausgeformt ist bzw. sind. Dies bedeutet, dass die radial innenliegende Kontur des/ der Permanentmagneten das Kreiskeilprofil trägt, so dass kein weiterer Verbindungspartner zwischen dem Rotorpaket und der Rotorwell erforderlich ist.

In einer vorteilhaften Ausgestaltung des Pumpenaggregats besteht die Rotorwelle aus einem keramischen Material. Da keramische Materialien besonders spröde sind und sich nicht schweißen lassen, bietet sich die erfindungsgemäße Kreiskeilverbindung bei Keramikwellen besonders an. Da Keramikwellen im Vergleich zu Metallwellen leichter sind und einen geringeren Abrieb besitzen, sind sie bei Nassläuferpumpen besonders vorteilhaft.

Bezüglich der Rotorwelle kann bei den vorbeschriebenen Ausführungsvarianten der Kreiskeil oder können die Kreiskeile unmittelbar in der Oberfläche der Rotorwelle ausgebildet sein. Alternativ kann die Rotorwelle aus der eigentlichen Welle und einer darauf aufliegenden Spannhülse bestehen, der Kreiskeil oder die Kreiskeile (5) in der radial außenliegenden Oberfläche dieser Spannhülse ausgebildet ist bzw. sind. Diese Ausführungsvariante ist besonders bei Rotorwellen geeignet, deren Wellen aus einem Material bestehen, die die Ausbildung von Keilprofilen nicht zulässt oder deren Bearbeitung zur Erstellung eines Keilprofils zu aufwendig ist, beispielsweise infolge besonderer Härte des Materials.

Weitere Vorteile und Eigenschaften des erfindungsgemäßen Pumpenaggregats sowie der erfindungsgemäßen Kreiskeilverbindung werden nachfolgend anhand von zwei Ausführungsbeispielen und den beigefügten Figuren näher erläutert. Es zeigen:
- Fig. 1:: Rotor einer ersten Ausführungsvariante des Kreiselpumpenaggregats in perspektiver Ansicht.
- Fig. 2:: Rotor der ersten Ausführungsvariante des Kreiselpumpenaggregats in einem radialen Querschnitt.
- Fig. 3:: Rotor einer zweiten Ausführungsvariante des Kreiselpumpenaggregats in perspektiver Ansicht.
- Fig. 4:: Rotor der zweiten Ausführungsvariante des Kreiselpumpenaggregats in einem radialen Querschnitt.

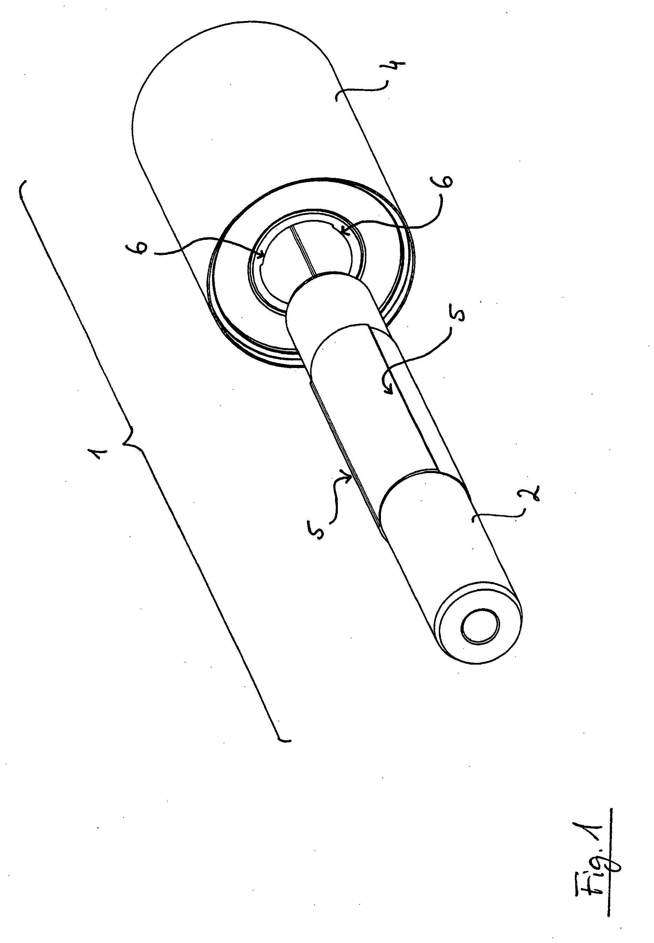

Figur 1 zeigt einen Rotor 1 einer ersten Ausführungsvariante eines Pumpenaggregats, insbesondere eines Kreiselpumpenaggregats, mit einer nicht dargestellten Pumpeneinheit und einem diese antreibenden, nasslaufenden Elektromotor. Der Rotor 1 ist Teil des nicht dargestellten Elektromotors und umfasst eine Rotorwelle 2 und ein Rotorpaket 4. In Figur 1 ist der Rotor 1 im disassemblierten Zustand dargestellt, wobei das Rotorpaket 4 zur Fixierung und Positionierung auf der Rotorwelle 2 zunächst in einem axialen Fügeschritt auf die Rotorwelle 2 aufgeschoben wird und anschließend relativ zur Rotorwelle verdreht wird.

Die Befestigung des Rotorpakets 4 auf der Rotorwelle 2 erfolgt dabei durch eine Kreiskeilverbindung 5, 6, welche durch drei Kreiskeile 5 einerseits und drei komplementäre Kreiskeile 6 andererseits gebildet ist. Hierzu ist die Außenumfangsfläche der Rotorwelle 2 in eine erste Umfangsrichtung A zur Ausbildung des mindestens einen Kreiskeils 5 entlang eines axialen Abschnitts keilförmig. Die dazu korrespondierende Innenumfangsfläche des Rotorpakets 4 3- bildet eine Gegenfläche, die in die entgegengesetzte Umfangsrichtung B zur Ausbildung des mindestens einen komplementären Kreiskeils 6 komplementär keilförmig ist. Das Kreiskeilprofil erstreckt sich seitens des Rotorpakets 4 entlang seiner axialen Gesamtlänge.

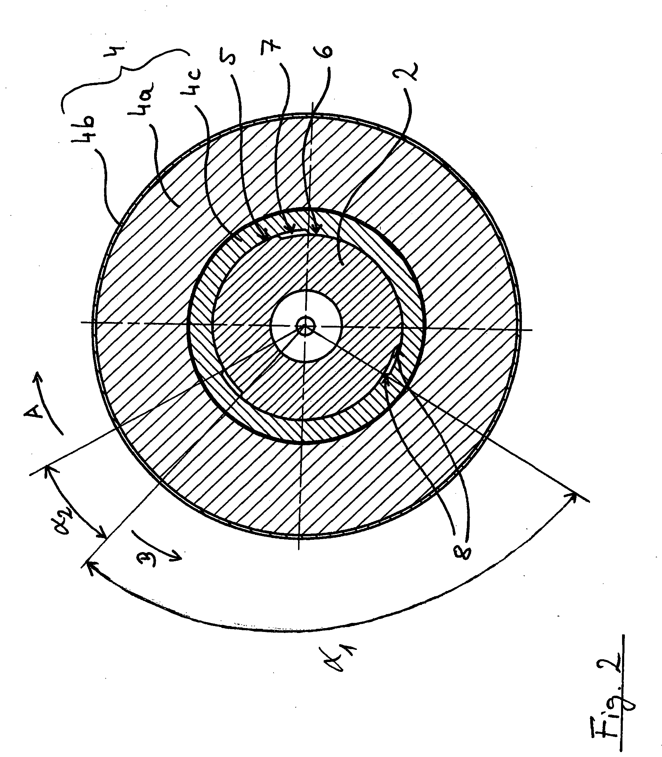

Jeder Kreiskeil 5, 6 ist durch ein Kreiskeilprofil gebildet, das sich von einem abgewickelten Grundkreis bis zu einer bestimmten Profilhöhe erhebt und anschließend mit einer Flanke 8 abfällt, die viel steiler ist als die Profilsteigung. Figur 2 zeigt einen radialen Querschnitt durch das auf der Rotorwelle 2 montierte Rotorpaket 4. Die erste Umfangsrichtung A und die zweite Umfangsrichtung B sind dort dargestellt. Rotorwelle und das Rotorpaket werden mit Spiel gefügt, wobei durch Verdrehen der beiden Teile gegeneinander das Spiel beseitigt wird. Die Rotorwelle wird dabei gegen das Rotorpaket verspannt, wobei die Keilprofile der Kreiskeile gegeneinander gepresst werden.

Das Rotorpaket 4 kann relativ zur Rotorwelle 2 dadurch verspannt werden, dass die Rotorwelle 2 bei feststehendem Rotorpaket 4 in die entgegengesetzte Umfangsrichtung B gedreht wird. In Bezug zum Rotorpaket 4 wird die Verspannung dagegen durch eine relative Drehung des Rotorpakets 4 bei feststehender Rotorwelle 2 in die erste Umfangsrichtung A bewirkt.

Die Drehung von Rotorpaket 4 und Rotorwelle 2 bewirkt, dass zwischen einem Kreiskeil 5 der Rotorwelle 2 und einem in Umfangsrichtung unmittelbar benachbarten komplementären Kreiskeil 6 des Rotorpakets im verspannten Zustand der Kreiskeilverbindung 5, 6 in Umfangsrichtung eine Öffnung 7 gebildet ist. Durch diese Öffnung kann im Betrieb des Kreiselpumpenaggregats die den Rotor 1 umgebende Flüssigkeit strömen. Dies gewährleistet einen optimalen Wärmetransport respektive eine homogene Wärmeverteilung innerhalb des Rotorraumes über die Flüssigkeit, und sorgt ferner dafür, dass vor und/ oder hinter dem Rotorpaket vorhandene Gleitlager ausreichend Flüssigkeit zur Schmierung erhalten.

Durch die Verwendung von drei Kreiskeilen 5 und drei komplementären Kreiskeilen 6 ergeben sich drei Öffnungen 7, die sich jeweils über einen Umfangswinkel α₂ von ca. 20° erstrecken. Vorzugsweise kann dieser Umfangswinkel bei anderen Ausführungsvarianten zwischen 10° und 60° betragen. Bei einem Umfangswinkel α₂ der Öffnungen 7 von ca. 19° betragen die Umfangswinkel α₁ der Kreiskeilprofile jeweils ca. 100°. Hierdurch ergibt sich bei der Kreiskeilverbindung 5, 6 eine umfängliche Kontaktfläche mit einem Gesamtumfangswinkel von ca. 300°.

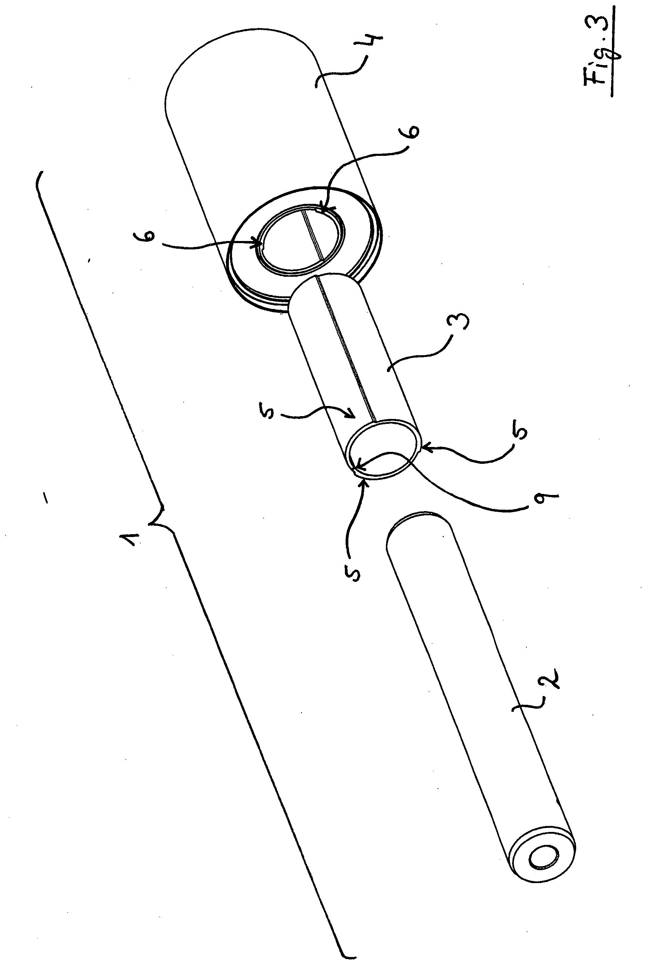

Figur 3 zeigt einen Rotor 1 einer zweiten Ausführungsvariante eines Kreiselpumpenaggregats mit einer nicht dargestellten Pumpeneinheit und einem diese antreibenden, nasslaufenden Elektromotor. Der Rotor1 unterscheidet sich von der ersten Ausführungsvariante lediglich darin, dass die Rotorwelle 2 eine Spannhülse 3 trägt, wobei die Kreiskeilkontur nicht unmittelbar in der Rotorwelle 2 selbst ausgebildet sind, sondern vielmehr in der darauf liegenden Spannhülse 3. Die Rotorwelle 2, 3 wird in dieser Ausführungsvariante folglich aus der eigentlichen Welle 2 und besagter Spannhülse 3 gebildet.

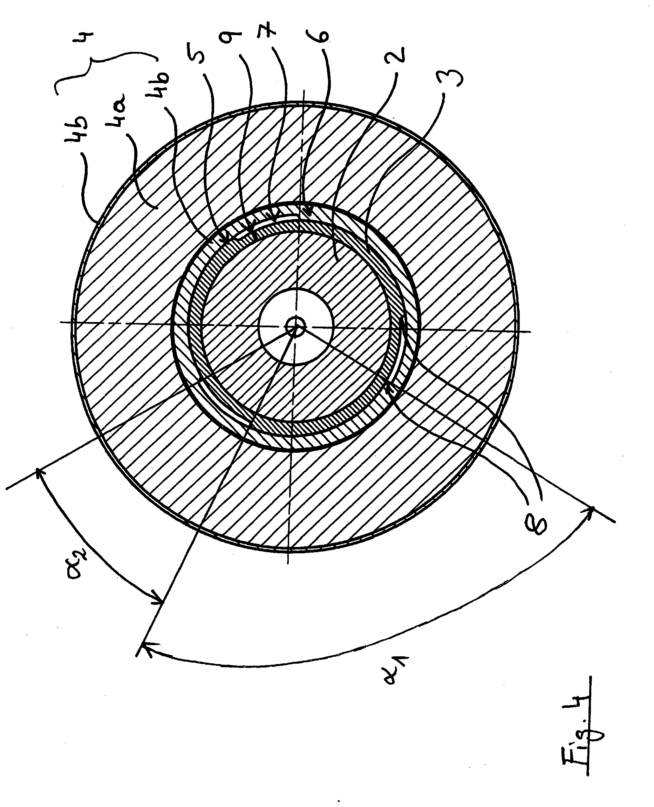

In Figur 3 ist der Rotor 1 ebenfalls im disassemblierten Zustand dargestellt, wobei zur Fixierung und Positionierung des Rotorpakets 4 auf der Rotorwelle 2 zunächst die Spannhülse 3 auf die Welle 2 in einem axialen Fügeschritt aufgeschoben wird, dann das Rotorpaket 4 auf die Rotorwelle 2 samt Spannhülse 3 aufgeschoben wird und anschließend relativ zur Rotorwelle 2, 3 verdreht wird. Die Spannhülse 3 ist ein kreiszylindrisches Element, das in axialer Richtung aufgeschnitten ist. Die Schnittlinie ist in Figur 3 und 4 mit Bezugsziffer 9 gekennzeichnet. Die Spannhülse 3 ist dadurch federelastisch. Ihr Innendurchmesser ist kleiner als der Außendurchmesser der Welle 2, so dass sie leicht aufgeweitet werden muss, um sie axial auf die Welle zu fügen.

Im Übrigen entsprechen die Ausführungsvarianten in den Figuren 3 und 4 denjenigen in den Figuren 1 und 2. Die Öffnungen 7 bei der Variante in Figur 4 erstrecken sich jeweils über einen Umfangswinkel α₂ von ca. 35°. Hierdurch ergibt sich bei der Kreiskeilverbindung 5, 6 eine umfängliche Kontaktfläche mit einem Gesamtumfangswinkel von ca. 255°. Damit umfasst ein Kreiskeilprofil einen Umfangswinkel α₁ von ca. 85°.

Bei den Ausführungsvarianten in den Figuren 1 bis 4 sind die Öffnungen 7 alle jeweils frei, so dass das im Rotorraum befindliche Medium, insbesondere das Fördermedium durch diese Öffnungen strömen kann.

Es besteht jedoch die Möglichkeit, in wenigstens eine der Öffnungen 7 ein Sperrmittel einzubringen, so dass sich die Kreiskeilverbindung nicht selbst lösen kann.

Weiterhin ist es möglich in eine der Öffnungen 7 vorzugsweise in alle Öffnungen ein Filterelement einzubringen, um die Flüssigkeit im Rotorraum zu filtern. Je nach Art und Beschaffenheit des Filterelements kann dieses auch sogleich als Sperrmittel dienen. Beispielsweise kann als Sperrmittel ein kleines hohles Rohr verwendet werden, das axial in eine der Öffnungen 7 eingeführt werden kann und das in seinem Inneren ein Filterelement aufweist. Alternativ kann als Filterelement ein zusammengepresstes Drahtgeflecht verwendet werden, das als Sperrmittel dienen kann.

Das Rotorpaket 4 weist in den Ausführungsvarianten nach den Figuren 1 bis 4 einen Permanentmagneten 4a auf, der mittels einer Hülse 4b gekapselt sind. Weiterhin besitzt es eine radial innenliegende Schicht 4c aus einem Kunststoff, in der die komplementären Kreiskeile 6 ausgebildet sind.

## Patentansprüche

1. Pumpenaggregat mit einer Pumpeneinheit und einem diese antreibenden Elektromotor umfassend einen Rotor (1) mit einer Rotorwelle (2, 3) und einem darauf befestigten Rotorpaket (4), **dadurch gekennzeichnet, dass** die Befestigung des Rotorpakets (4) auf der Rotorwelle (2,3) durch eine Kreiskeilverbindung (5, 6) umfassend mindestens einen Kreiskeil (5) und einen komplementären Kreiskeil (6) gebildet ist, wobei der Rotor (1) nasslaufend ist und zwischen wenigstens einem Kreiskeil (5) und einem in Umfangsrichtung benachbarten komplementären Kreiskeil (6) im verspannten Zustand der Kreiskeilverbindung (5, 6) in Umfangsrichtung eine Öffnung (7) gebildet ist, durch die im Betrieb des Pumpenaggregats die den Rotor (1) umgebende Flüssigkeit strömen kann, und wobei die Kreiskeilverbindung (5, 6) eine umfängliche Kontaktfläche mit einem Gesamtumfangswinkel zwischen 180° und 330° bildet.

2. Pumpenaggregat nach Anspruch 1, **dadurch gekennzeichnet, dass** die Kreiskeilverbindung (5, 6) dadurch gebildet ist, dass die Außenumfangsfläche der Rotorwelle (2, 3) in eine erste Umfangsrichtung (A) zur Ausbildung des mindestens einen Kreiskeils (5) zumindest axialabschnittsweise keilförmig ist, und die dazu korrespondierende Innenumfangsfläche des Rotorpakets (4) eine Gegenfläche bildet, die in die entgegengesetzte Umfangsrichtung (B) zur Ausbildung des mindestens einen komplementären Kreiskeils (6) zumindest axialabschnittsweise komplementär keilförmig ist.

3. Pumpenaggregat nach Anspruch 1 oder 2, **dadurch gekennzeichnet, dass** die Kreiskeilverbindung (5, 6) durch drei Kreiskeile (5) auf der Außenumfangsfläche der Rotorwelle (2, 3) und drei komplementäre Kreiskeile (6) auf der Innenumfangsfläche des Rotorpakets (4) gebildet ist.

4. Pumpenaggregat nach einem der vorherigen Ansprüche, **dadurch gekennzeichnet, dass** die Steigung der Kreiskeile (5, 6) zwischen 1:20 und 1:200 liegt.

5. Pumpenaggregat nach einem der vorherigen Ansprüche, **dadurch gekennzeichnet, dass** zwischen einem jeden Kreiskeil (5) und in Umfangsrichtung benachbarten komplementären Kreiskeil (6) im verspannten Zustand der Kreiskeilverbindung eine Öffnung (7) gebildet ist, von denen durch mindestens eine im Betrieb des Pumpenaggregats die den Rotor (1) umgebende Flüssigkeit strömen kann.

6. Pumpenaggregat nach einem der vorherigen Ansprüche, **dadurch gekennzeichnet, dass** in der Öffnung (7) oder wenigstens einer der Öffnungen (7) ein Sperrmittel einliegt.

7. Pumpenaggregat nach einem der vorherigen Ansprüche, **dadurch gekennzeichnet, dass** in der Öffnung (7) oder wenigstens einer der Öffnungen (7) ein Filterelement einliegt.

8. Pumpenaggregat nach Anspruch 6 und 7, **dadurch gekennzeichnet, dass** das Filterelement das Sperrmittel bildet.

9. Pumpenaggregat nach einem der vorherigen Ansprüche, **dadurch gekennzeichnet, dass** das Rotorpaket (4) eine radial innenliegende Schicht (4c) aus einem Kunststoff aufweist, in der der komplementäre Kreiskeil (6) oder die komplementären Kreiskeile (6) ausgebildet ist/sind.

10. Pumpenaggregat nach einem der vorherigen Ansprüche, **dadurch gekennzeichnet, dass** die Rotorwelle (2) aus einem keramischen Material besteht.

11. Pumpenaggregat nach einem der vorherigen Ansprüche, **dadurch gekennzeichnet, dass** die Kreiskeilverbindung (5, 6) entlang der gesamten axialen Länge des Rotorpakets (4) vorhanden ist.

12. Pumpenaggregat nach einem der vorherigen Ansprüche, **dadurch gekennzeichnet, dass** die Drehrichtung des Elektromotors der ersten Umfangsrichtung (A) entspricht.

13. Pumpenaggregat nach einem der vorherigen Ansprüche, **dadurch gekennzeichnet, dass** der Kreiskeil (5) oder die Kreiskeile (5) unmittelbar in der Oberfläche der Rotorwelle ausgebildet ist/ sind.

14. Pumpenaggregat nach einem der vorherigen Ansprüche, **dadurch gekennzeichnet, dass** der Kreiskeil (5) oder die Kreiskeile (5) in der radial außenliegenden Oberfläche einer Spannhülse ausgebildet ist/ sind, die auf der Rotorwelle (2) aufliegt.

15. Pumpenaggregat nach einem der vorherigen Ansprüche, **dadurch gekennzeichnet, dass** die Kontur der Kreiskeile (5, 6) als logarithmische Spirale ausgeführt ist.

## Claims

1. Pump assembly comprising a pump unit and an electric motor driving said pump unit, comprising a rotor (1) having a rotor shaft (2, 3) and a rotor stack (4) fastened thereon, **characterised by** the fastening of the rotor stack (4) on the rotor shaft (2,3) being formed by a circular wedge-shaped connection (5, 6) comprising at least one circular wedge-shaped segment (5) and one complementary circular wedge-shaped segment (6), wherein the rotor (1) is wet running and an opening (7) in the circumferential direction through which the liquid surrounding the rotor (1) can flow during operation of the pump assembly is formed in the uptight state of the circular wedge-shaped connection (5, 6) between at least one circular wedge-shaped segment (5) and one complementary circular wedge-shaped segment (6) that is adjacent in the circumferential direction, and in which the circular wedge-shaped connection (5, 6) forms a peripheral contact surface with an overall peripheral angle between 180° and 330°.

2. Pump assembly according to claim 1, **characterised by** the circular wedge-shaped connection (5, 6) being formed by the outer peripheral surface of the rotor shaft (2, 3) being wedge-shaped, at least in an axial section, in a first circumferential direction (A) to form the at least one circular wedge-shaped segment (5), and the corresponding inner peripheral surface of the rotor stack (4) having a complementary wedge shape, at least in an axial section, forming a mating surface in the opposite circumferential direction (B) to form the at least one complementary circular wedge-shaped segment (6).

3. Pump assembly according to claim 1 or 2, **characterised by** the circular wedge-shaped connection (5, 6) being formed by three circular wedge-shaped segments (5) on the outer peripheral surface of the rotor shaft (2, 3) and three complementary circular wedge-shaped segments (6) on the inner peripheral surface of the rotor stack (4).

4. Pump assembly according to one of the preceding claims, **characterised by** the pitch of the circular wedge-shaped segments (5, 6) being in the range of 1:20 to 1:200.

5. Pump assembly according to one of the preceding claims, **characterised by** an opening (7) being formed between each circular wedge-shaped segments (5) and the complementary circular wedge-shaped segments (6) adjacent in the circumferential direction in the uptight state of the circular wedge-shaped connection, through at least one of which openings the liquid surrounding the rotor (1) can flow during operation of the pump assembly.

6. Pump assembly according to one of the preceding claims, **characterised by** a sealing device lying in the opening (7) or at least one of the openings (7).

7. Pump assembly according to one of the preceding claims, **characterised by** a filter element lying in the opening (7) or at least one of the openings (7).

8. Pump assembly according to claims 6 and 7, **characterised by** the filter element forming the sealing device.

9. Pump assembly according to one of the preceding claims, **characterised by** the rotor stack (4) having a radial inner layer (4c) made of a synthetic material, in which the complementary circular wedge-shaped segment (6) or complementary circular wedge-shaped segments (6) is/are formed.

10. Pump assembly according to one of the preceding claims, **characterised by** the rotor shaft (2) being made of a ceramic material.

11. Pump assembly according to one of the preceding claims, **characterised by** the circular wedge-shaped connection (5, 6) being formed along the entire axial length of the rotor stack (4).

12. Pump assembly according to one of the preceding claims, **characterised by** the rotation direction of the electric motor corresponding to the first circumferential direction (A).

13. Pump assembly according to one of the preceding claims, **characterised by** the circular wedge-shaped segment (5) or circular wedge-shaped segments (5) being formed directly in the surface of the rotor shaft.

14. Pump assembly according to one of the preceding claims, **characterised by** the circular wedge-shaped segments (5) or circular wedge-shaped segments (5) being formed in the radial outer surface of a clamping sleeve that lies on the rotor shaft (2).

15. Pump assembly according to one of the preceding claims, **characterised by** the contour of the circular wedge-shaped segments (5, 6) being carried out as a logarithmic spiral.

## Revendications

1. Unité de pompage avec un groupe de pompe entraîné par un moteur électrique comprenant un rotor (1) avec un arbre du rotor (2, 3) sur lequel est fixé un paquet rotor (4), **caractérisée en ce que** la fixation du paquet rotor (4) sur l'arbre du rotor (2, 3) est formée par un clavetage circulaire (5, 6) comprenant au moins une clavette circulaire (5) et une clavette circulaire complémentaire (6), sachant que le rotor (1) est de type noyé et qu'entre au moins une clavette circulaire (5) et une clavette circulaire complémentaire (6) adjacente en direction circonférentielle à l'état serré du clavetage circulaire (5, 6) une ouverture (7) est formée en direction circonférentielle à travers de laquelle le liquide entourant le rotor (1) peut s'écouler lorsque l'unité de pompage fonctionne, et sachant que le clavetage circulaire (5, 6) forme une surface de contact circonférentielle avec un angle circonférentiel total compris entre 180 et 330°.

2. Unité de pompage selon la revendication 1, **caractérisé en ce que** le clavetage circulaire (5, 6) est formé **en ce que** la surface circonférentielle extérieure de l'arbre du rotor (2, 3) dans sa première direction circonférentielle (A) est, pour former au moins une clavette circulaire (5), au moins en section axiale en forme de cale, et la surface circonférentielle intérieure correspondante du paquet rotor (4) forme une contre-surface, qui, dans la direction circonférentielle opposée (B) est, pour former au moins une clavette circulaire complémentaire (6), au moins en section axiale en forme de cale complémentaire.

3. Unité de pompage selon la revendication 1 ou 2, **caractérisée en ce que** le clavetage circulaire (5, 6) est formé de trois clavettes circulaires (5) sur la surface circonférentielle extérieure de l'arbre du rotor (2, 3) et de trois clavettes circulaires complémentaires (6) sur la surface circonférentielle intérieure du paquet rotor (4).

4. Unité de pompage selon l'une des revendications précédentes, **caractérisée en ce que** l'inclinaison des clavettes circulaires (5, 6) et entre 1:20 et 1:200.

5. Unité de pompage selon l'une des revendications précédentes, **caractérisée en ce qu'**entre chaque clavette circulaire (5) et sa clavette circulaire complémentaire (6) voisine en direction circonférentielle forment, en état serré du clavetage circulaire, une ouverture (7), traversée, lorsque l'unité de pompage fonctionne, par le liquide entourant le rotor (1).

6. Unité de pompage selon l'une des revendications précédentes, **caractérisée en ce qu'**un dispositif d'arrêt est placé dans l'ouverture (7) ou au moins dans l'une des ouvertures (7).

7. Unité de pompage selon l'une des revendications précédentes, **caractérisée en ce qu'**un élément filtrant est placé dans l'ouverture (7) ou au moins dans l'une des ouvertures (7).

8. Unité de pompage selon les revendications 6 et 7, **caractérisée en ce que** l'élément filtrant est le dispositif d'arrêt.

9. Unité de pompage selon l'une des revendications précédentes, **caractérisée en ce que** le paquet rotor (4) présente un revêtement intérieur radial (4c) en plastique dans lequel la clavette circulaire complémentaire (6) ou les clavettes circulaires complémentaires (6) sont formées.

10. Unité de pompage selon l'une des revendications précédentes, **caractérisée en ce que** l'arbre du rotor (2) est en matériau céramique.

11. Unité de pompage selon l'une des revendications précédentes, **caractérisée en ce que** le clavetage circulaire (5, 6) s'étend le long de toute la longueur axiale du paquet rotor (4).

12. Unité de pompage selon l'une des revendications précédentes, **caractérisée en ce que** le sens de rotation du moteur électrique correspond à la première direction circonférentielle (A).

13. Unité de pompage selon l'une des revendications précédentes, **caractérisée en ce que** la clavette circulaire (5) ou les clavettes circulaires (5) sont formées directement dans la surface de l'arbre du rotor.

14. Unité de pompage selon l'une des revendications précédentes, **caractérisée en ce que** la clavette circulaire (5) ou les clavettes circulaires (5) sont formées dans la surface radiale extérieure d'un manchon de serrage reposant sur l'arbre du rotor (2).

15. Unité de pompage selon l'une des revendications précédentes, **caractérisée en ce que** le contours des clavettes circulaires (5, 6) forme une spirale logarithmique.
